# EUROPEAN PATENT APPLICATION

(11) **EP 4 585 559 A1**
(43) Date of publication of application: **16.07.2025**
(21) Application number: 23874903.0
(22) Date of filing: 04.10.2023
(51) Int. Cl.: C01B 21/097, C01B 25/14, C01B 25/455, C07F 9/24, C07F 9/26, C07F 9/58

(54) **METHOD FOR PRODUCING IMIDIC ACID OR IMIDIC ACID SALT**

(30) Priority: 07.10.2022 JP 2022162214
(71) Applicant: Central Glass Company, Limited, Ube-shi, Yamaguchi 755-0001 (JP)
(72) Inventor: MORINAKA, Takayoshi, Tokyo 101-0054 (JP); NAKAHARA, Keita, Tokyo 101-0054 (JP); IWASAKI, Susumu, Tokyo 101-0054 (JP); SHINMEN, Masutaka, Tokyo 101-0054 (JP); TAKAHASHI, Mikihiro, Tokyo 101-0054 (JP)
(74) Representative: Manitz Finsterwald Patent- und Rechtsanwaltspartnerschaft mbB
(86) International application number: PCT/JP2023/036209
(87) International publication number: WO 2024/075777

(57) **Abstract**

A new method for producing an imidic acid or an imidic acid salt having a phosphoryl group is provided by a method for producing an imidic acid or an imidic acid salt represented by the following formula [1], including a reaction step of allowing a phosphoryl isocyanate represented by the following formula [2] to react with a compound represented by the following formula [3]:

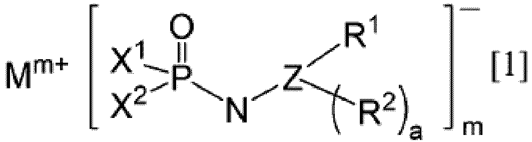

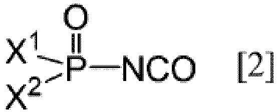

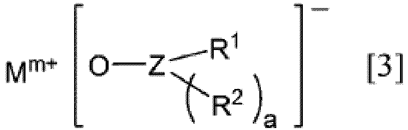

## Description

### TECHNICAL FIELD

The present disclosure relates to methods for producing various imidic acids or imidic acid salts having a phosphoryl group.

### BACKGROUND ART

It has recently been known that various imidic acids having a phosphoryl group such as bis(phosphoryl)imide (HN(POX₂)₂) and asymmetric phosphorylimide (HN(POX₂)(SO₂X)), and metal salts and onium salts thereof are useful substances as anion sources for ionic conductive materials and ionic liquids, and electrolytes and additives for a nonaqueous electrolytic solution battery such as a lithium ion battery, a lithium battery, a lithium ion capacitor, and a sodium ion battery.

Regarding a method for producing a bis(phosphoryl)imidic acid compound, Patent Literature 1 describes a method for obtaining a bis(halogenated phosphoryl)imidic acid compound by allowing a phosphoryl halide to react with ammonia in the presence of an organic base (the following Reaction Formula: (1)).

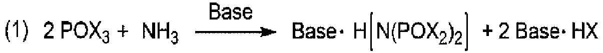

Non-Patent Literature 1 describes a method for obtaining lithium bis(difluorophosphoryl)imide by allowing LiN(SiMe₃)₂, which is a silazane metal compound, to react with phosphoryl trifluoride (POF₃) (the following Reaction Formula: (2)).

(2) 2 POF₃ + LiN(SiMe₃)₂ → LiN(POF₂)₂ + 2 Me₃SiF

Patent Literature 2 describes a method for obtaining an asymmetric phosphoryl imide by allowing a silazane derivative containing a sulfonyl group to react with phosphorus oxychloride (the following Reaction Formula: (3)).

(3) K[CF₃SO₂NSiMe₃] + POCl₃ → K[CF₃SO₂NPOCl₂] + Me₃SiCl

### CITATION LIST

### PATENT LITERATURE

Patent Literature 1: JP2010-254554A
Patent Literature 2: Chinese Patent Publication No. CN102617414A

### NON-PATENT LITERATURE

Non-Patent Literature 1: Z. Anorg. Allg. Chem. 412(1), 65-70 (1975)

### SUMMARY OF INVENTION

### TECHNICAL PROBLEM

An object of the present disclosure is to provide a new method for producing an imidic acid or an imidic acid salt having a phosphoryl group.

### SOLUTION TO PROBLEM

The inventors of the present invention have found a new production method for obtaining an imidic acid or an imidic acid salt having a phosphoryl group represented by the formula [1] or [4] described later and achieved the present disclosure.
[1]
   A method for producing an imidic acid or an imidic acid salt represented by the following formula [1], including a reaction step of allowing a phosphoryl isocyanate represented by the following formula [2] to react with a compound represented by the following formula [3].

(Hereinafter, the production method is sometimes referred to as "invention 1".)

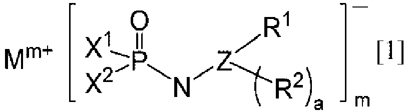

[In the formula [1], X¹ and X² are each independently a chlorine atom, a fluorine atom, or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from the group consisting of a fluorine atom, an oxygen atom, a nitrogen atom, and an unsaturated bond may be present in the organic group.

Z is -P(=O)-, -S(=O)₂-, or -C(=O)-. When Z is -P(=O)-, a is 1, and when Z is -S(=O)₂-, or -C(=O)-, a is 0.

R¹ and R² are each independently a chlorine atom, a fluorine atom, or an organic group selected from the group consisting of a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from the group consisting of a fluorine atom, an oxygen atom, and an unsaturated bond may be present in the organic group.

M is a proton, an alkali metal cation, an alkaline earth metal cation, or an onium cation, and
m represents the same integer as a valence of the corresponding cation.]

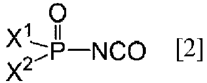

[In the formula [2], X¹ and X² are the same as in the formula [1].]

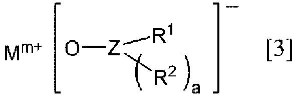

[In the formula [3], Z is -P(=O)-, -S(=O)₂-, or -C(=O)-.

When Z is -P(=O)-, a is 1.

When Z is -S(=O)₂-, a is 0.

When Z is -C(=O)-, a is 0.

R¹ and R² are each independently a chlorine atom, a fluorine atom, or an organic group selected from the group consisting of a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from the group consisting of a fluorine atom, an oxygen atom, and an unsaturated bond may be present in the organic group.

M is a proton, an alkali metal cation, an alkaline earth metal cation, or an onium cation, and
m represents the same integer as a valence of the corresponding cation.]

[2]
The method for producing an imidic acid or an imidic acid salt according to [1], in which a used amount of the phosphoryl isocyanate represented by the formula [2] is 0.1 to 10 mol per 1 mol of the compound represented by the formula [3] (hereinafter, sometimes referred to as "the [2]/[3] molar ratio is 0.1 to 10" or the like).

[3]
The method for producing an imidic acid or an imidic acid salt according to [1] or [2], in which a reaction temperature in the reaction step is -20 to 200°C.

[4]
The method for producing an imidic acid or an imidic acid salt according to any one of [1] to [3], in which the reaction step is performed in a reaction solvent.

[5]
The method for producing an imidic acid or an imidic acid salt according to [4], in which the reaction solvent is at least one solvent selected from the group consisting of a nitrile, a chain ether, a cyclic ether, a chain ester, a cyclic ester, a chain carbonate, a cyclic carbonate, and a sulfur-containing solvent.

[6]
The method for producing an imidic acid or an imidic acid salt according to any one of [1] to [5], in which M^{m+} is a proton, a lithium ion, a sodium ion, a potassium ion, a trialkyl ammonium ion, or a tetraalkyl ammonium ion.

[7]
The method for producing an imidic acid or an imidic acid salt according to any one of [1] to [6], in which X¹ and X² are each independently a chlorine atom, a fluorine atom, or a group selected from the group consisting of a methyl group, a trifluoromethyl group, a phenyl group, a fluorophenyl group, a vinyl group, a thienyl group, and a pyridinyl group.

[8]
The method for producing an imidic acid or an imidic acid salt according to any one of [1] to [7], in which a reaction solution after the reaction step is degassing-concentrated.

The "degassing concentration" is a method in which a gas phase portion containing a volatile component from the reaction solution is depressurized, or a carrier gas containing substantially no moisture such as an inert gas such as nitrogen and argon and dry air is circulated to discharge the volatile component out of the system, thereby increasing the concentration of the solute in the reaction solution. Lower limit temperature in the degassing concentration may be -20°C or 10°C. Upper limit temperature in the degassing concentration may be 90°C or 60°C. When the temperature in the degassing concentration is -20°C or higher, the concentration efficiency is high. When the temperature is 90°C or lower, the reaction solution is hardly colored.

The "degassing concentration" of the invention 2 described later is the same as described above.

[9]
A method for producing an imidic acid or an imidic acid salt represented by the following formula [4], including a reaction step of allowing a sulfonyl isocyanate represented by the following formula [5] to react with a compound represented by the following formula [6].

(Hereinafter, the production method is sometimes referred to as "invention 2".)

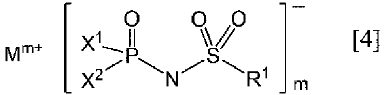

[In the formula [4], X¹ and X² are each independently a chlorine atom, a fluorine atom, or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from the group consisting of a fluorine atom, an oxygen atom, a nitrogen atom, and an unsaturated bond may be present in the organic group.

R¹ is a chlorine atom, a fluorine atom, or an organic group selected from a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from the group consisting of a fluorine atom, an oxygen atom, and an unsaturated bond may be present in the organic group.

M is a proton, an alkali metal cation, an alkaline earth metal cation, or an onium cation, and
m represents the same integer as a valence of the corresponding cation.]

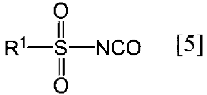

[In the formula [5], R¹ is a chlorine atom, a fluorine atom, or an organic group selected from a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and at least one selected from the group consisting of a fluorine atom, an oxygen atom, and an unsaturated bond may be present in the organic group.]

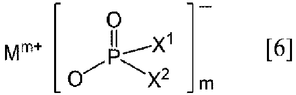

[In the formula [6], X¹ and X² are each independently a chlorine atom, a fluorine atom, or an organic group selected from a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and at least one selected from the group consisting of a fluorine atom, an oxygen atom, a nitrogen atom, and an unsaturated bond may be present in the organic group.

M is a proton, an alkali metal cation, an alkaline earth metal cation, or an onium cation, and
m represents the same integer as a valence of the corresponding cation.]

[10]
The method for producing an imidic acid or an imidic acid salt according to [9], in which a used amount of the sulfonyl isocyanate represented by the formula [5] is 0.1 to 10 mol per 1 mol of the compound represented by the formula [6] (hereinafter, sometimes referred to as "[5]/[6] molar ratio is 0.1 to 10" or the like).

[11]
The method for producing an imidic acid or an imidic acid salt according to [9] or [10], in which a reaction temperature in the reaction step is 0 to 150°C.

[12]
The method for producing an imidic acid or an imidic acid salt according to any one of [9] to [11], in which the reaction step is performed in a reaction solvent.

[13]
The method for producing an imidic acid or an imidic acid salt according to [12], in which the reaction solvent is at least one solvent selected from the group consisting of a nitrile, a chain ether, a cyclic ether, a chain ester, a cyclic ester, a chain carbonate, a cyclic carbonate, and a sulfur-containing solvent.

[14]
The method for producing an imidic acid or an imidic acid salt according to any one of [9] to [13], in which M^{m+} is a proton, a lithium ion, a sodium ion, a potassium ion, a trialkyl ammonium ion, or a tetraalkyl ammonium ion.

[15]
The method for producing an imidic acid or an imidic acid salt according to any one of [9] to [14], in which X¹ and X² are each independently a chlorine atom, a fluorine atom, or a group selected from a methyl group, a trifluoromethyl group, a phenyl group, a fluorophenyl group, a vinyl group, a thienyl group, and a pyridinyl group.

[16]
The method for producing an imidic acid or an imidic acid salt according to any one of [9] to [15], in which a reaction solution after the reaction step is degassing-concentrated.

In the production methods of the present disclosure, when the imidic acid or the imidic acid salt having a phosphoryl group represented by the formula [1] or [4] is obtained, a solid by-product is hardly formed, and carbon dioxide is produced as a by-product. Since carbon dioxide is a gas at normal temperature at normal pressure, separation from the reaction solution is easy, and special treatment of carbon dioxide is not required after separation. Thus, the production methods of the present disclosure are industrially suitable.

### ADVANTAGEOUS EFFECTS OF INVENTION

According to the present disclosure, a new method for producing an imidic acid or an imidic acid salt having a phosphoryl group can be provided.

### DESCRIPTION OF EMBODIMENTS

Hereinafter, the present disclosure will be explained in detail, but the explanation of the constituent elements described below is an example of an embodiment of the present disclosure, and the present disclosure is not limited to these specific contents. Various modifications can be made within the scope of the gist.

In inventions 1 and 2, the water content of the compound represented by the formula [3] or [6] used as a raw material of the reaction step may be 1000 ppm by mass or less. When the water content is 1000 ppm by mass or less, the compound represented by the formula [2] or [5], which is the reaction partner, is hardly hydrolyzed. From the above viewpoint, the smaller the water content is, the more preferable it is.

In addition, in the inventions 1 and 2, from the viewpoint of suppressing solvolysis or hydrolysis of the compound represented by the formula [2] or [5], which is a raw material of the reaction step, the reaction solvent which may be used in the reaction step may be an aprotic solvent such as nitriles, chain ethers, cyclic ethers, chain esters, cyclic esters, chain carbonates, cyclic carbonates, and sulfur-containing solvents. The water content of the aprotic solvent may be 1000 ppm by mass or less or 100 ppm by mass or less. From the viewpoint of suppressing hydrolysis of the compound represented by the formula [2] or [5], the smaller the water content is, the more preferable it is.

Specific examples of the aprotic solvent include nitriles such as acetonitrile, propionitrile, and valeronitrile; chain ethers such as diethyl ether, diisopropyl ether, and 1,2-dimethoxyethane; cyclic ethers such as tetrahydrofuran, 2-methyltetrahydrofuran, and tetrahydropyran; chain esters such as ethyl acetate, butyl acetate, and isopropyl acetate; cyclic esters such as y-butyrolactone and γ-valerolactone; chain carbonates such as diethyl carbonate, dimethyl carbonate, and ethyl methyl carbonate; cyclic carbonates such as propylene carbonate, ethylene carbonate, and butylene carbonate; and sulfur-containing solvents such as sulfolane, 3-methylsulfolane, and dimethyl sulfoxide. These aprotic solvents used may be dehydrated. The dehydration method is not particularly limited, and for example, a method of adsorbing water with synthetic zeolite or the like can be used.

One kind of the aprotic solvent may be used alone, or two or more kinds of the aprotic solvents may be mixed and used in any combination at any ratio in accordance with the application.

The amount of the reaction solvent may be in the range of 0.1 to 100 parts by mass per one part by mass of the compound represented by the formula [3] or [6]. When the amount is 0.1 parts by mass or more, an increase in the viscosity due to the imidic acid or the imidic acid salt having a phosphoryl group represented by the formula [1] generated by the reaction is easily suppressed, and the subsequent reaction easily proceeds smoothly. When the amount is 100 parts by mass or less, there is no problem in the reaction itself, which is economical. From the above viewpoint, the amount of the reaction solvent may be in the range of 0.1 to 20 parts by mass or in the range of 1 to 10 parts by mass per one part by mass of the compound represented by the formula [3] or [6].

The used amount of the isocyanate compound represented by the formula [2] or [5] in the reaction step of the inventions 1 and 2 may be 0.1 to 10 mol per 1 mol of the compound represented by the formula [3] or [6], which is the corresponding reaction partner. When the amount is 0.1 molar equivalent or more, the imidic acid or the imidic acid salt having a phosphoryl group is obtained more, which is economical. In addition, when the amount is 10 molar equivalents or less, the amount of the excess isocyanate compound is low, which is economical. From the above viewpoint, the used amount of the isocyanate compound represented by the formula [2] or [5] may be 0.5 to 2 mol per 1 mol of the compound represented by the formula [3] or [6].

Furthermore, when the compound represented by the formula [3] or [6] is excessive, a step of filtering and removing the excess amount from the reaction solution is required, and therefore, from the viewpoint of simplifying the process, the amount of the isocyanate compound, which can be removed by the degassing concentration, may be excessive. In this case, the used amount of the isocyanate compound represented by the formula [2] or [5] may be 1.01 to 2 mol per 1 mol of the compound represented by the formula [3] or [6].

The temperature of the reaction step of the inventions 1 and 2 may be appropriately adjusted considering the thermal stability of the compounds as the raw materials and the imidic acid or the imidic acid salt to be generated, and the like, and the temperature may be, for example, in the range of -20 to 200°C. When the reaction temperature is -20°C or higher, the reaction time tends to be short. When the temperature is 200°C or lower, decomposition of the compounds as the raw materials and the imidic acid or the imidic acid salt to be generated hardly occurs. The reaction temperature may be in the range of 0 to 150°C or in the range of 10 to 120°C.

The reaction time of the reaction step of the inventions 1 and 2 is not particularly restricted, but the reaction may be terminated after confirming that the consumption of the raw materials is sufficiently advanced and that the reaction is no longer proceeding by methods such as NMR, gas chromatography, or high-performance liquid chromatography, and those skilled in the art can appropriately adjust the reaction time.

In the inventions 1 and 2, since the isocyanate compound as the raw material and the reaction product thereof are easily hydrolyzed by moisture, the reaction may be performed in an atmosphere containing no moisture. For example, the reaction may be performed in an inert gas atmosphere such as nitrogen.

The material of the reactor used in the reaction step of the inventions 1 and 2 is not particularly restricted as long as it is not eroded by a raw material or the reaction product, and a reactor in which the inside is lined with tetrafluoroethylene resin, chlorotrifluoroethylene resin, vinylidene fluoride resin, PFA resin, glass, or the like, or a glass container can be used. A metal container of stainless steel, Hastelloy, Monel, or the like and the like can also be used. In order to suppress foaming due to the by-produced CO₂, a defoaming blade may be installed on the inner wall of the reactor used, in the stirrer, or in both thereof.

In the reaction step of the inventions 1 and 2, the order in which the reaction raw materials are charged is not particularly restricted, but a procedure in which the reaction solvent and the compound represented by the formula [3] or [6] are charged in this order and then stirred and the isocyanate compound represented by the formula [2] or [5], which is the corresponding reaction partner, is gradually added may be applied, because by-product carbon dioxide gas may be generated rapidly to cause foaming. The addition time is not particularly restricted and can be any time, but the isocyanate compound may be added over 0.5 to 10 hours. When the addition time exceeds 10 hours, a long time is required, which is not economical. After the isocyanate compound represented by the formula [2] or [5] is added as described above, the reaction may be further performed by continuing stirring for about 1 to 15 hours.

The reaction solution after the reaction step of the inventions 1 and 2 may be degassed and concentrated. The degassing concentration is a method in which a gas phase portion containing a volatile component from the reaction solution is depressurized, or a carrier gas containing substantially no moisture such as an inert gas such as nitrogen and argon and dry air is circulated to discharge the volatile component out of the system, thereby increasing the concentration of the solute in the reaction solution. By this operation, the by-product dissolved carbon dioxide can be removed. Lower limit temperature in the degassing concentration may be -20°C or 10°C. Upper limit temperature in the degassing concentration may be 90°C or 60°C. When the temperature in the degassing concentration is -20°C or higher, the concentration efficiency is high. When the temperature is 90°C or lower, the reaction solution is hardly colored.

The reaction solution containing the imidic acid, the imidic acid salt, and the solvent obtained by the production method of the present disclosure can be used as, for example, an anionic raw material of an ionic liquid, an electrolyte or an additive for a nonaqueous electrolytic solution, an antistatic agent, or the like. The reaction solution may be further filtered, concentrated, or diluted for use in the above applications. In addition, the imidic acid or the imidic acid salt can be precipitated and isolated by concentration or the like of the reaction solution.

The reaction yield in the invention 1 is calculated based on the molar amount of the compound with a smaller charged amount between the phosphoryl isocyanate represented by the formula [2] and the compound represented by the formula [3].

The reaction yield in invention 2 is calculated based on the molar amount of the compound with a smaller charged amount between the sulfonyl isocyanate represented by the formula [5] and the compound represented by the formula [6].

### Examples

Hereinafter, the present disclosure will be specifically explained with Examples, but the present disclosure is not limited to these Examples.

### [Example 1]

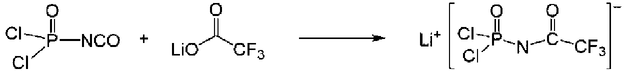

To a 50-mL glass reactor equipped with a stirrer and a thermometer, 20.00 g of propionitrile (water content: 40 ppm by mass) as a reaction solvent and 0.44 g (3.7 mmol) of lithium trifluoroacetate (water content: 90 ppm by mass) as a compound represented by the formula [3] were added in a nitrogen atmosphere and stirred at a liquid temperature of 23°C.

With maintaining the liquid temperature of 23°C, 0.70 g (4.4 mmol) of dichlorophosphoryl isocyanate as a phosphoryl isocyanate represented by the formula [2] was added dropwise thereto over 10 minutes. After the completion of the dropwise addition, the liquid temperature was raised to 60°C, and stirring was further continued for eight hours to perform the reaction. As a result of analyzing and quantifying the reaction solution with ¹⁹F-NMR, the reaction yield of lithium [(dichlorophosphoryl)(trifluoromethanecarbonyl)imide] was 98% based on lithium trifluoroacetate. The reaction solution was concentrated under reduced pressure to remove dissolved carbon dioxide and dichlorophosphoryl isocyanate, and thus lithium [(dichlorophosphoryl)(trifluoromethanecarbonyl)imide] was obtained. The results are shown in Table 1.

**[Table 1]**

| | Invention | Formula [2] | | Formula [3] | | | | | [2]/[3] Molar Ratio | Reaction Temperature [°C] | Reaction Solvent | Filtration Removal | Degassing-Concentration | Reaction Yield [%] | By-product |
|---|---|---|---|---|---|---|---|---|---|---|---|---|---|---|---|
| | | X1 | X2 | Z | R1(R2) | a | M | m | | | | | | | |
| Example 1 | 1 | -Cl | -Cl | -C(=O)- | -CF3 | 0 | Li | 1 | 1.20 | 60 | Propionitrie | Without | With | 98 | CO2 |
| Example 2 | 1 | -OEt | -OEt | -C(=O)- | -C(=CH2)CH3 | 0 | Li | 1 | 1.15 | 20 | Ethyl acetate | Without | With | 88 | CO2 |
| Example 3 | 1 | -F | -F | -C(=O)- | 2-Pyridyl group | 0 | Li | 1 | 0.85 | 20 | EMC | With | Without | 98 | CO2 |
| Example 4 | 1 | -F | -F | -S(O)2- | Phenyl group | 0 | Na | 1 | 1.79 | 50 | Ethyl acetate | Without | With | 91 | CO2 |
| Example 5 | 1 | -F | -F | -P(=O)- | -F | 1 | Et3NH | 1 | 1.43 | 60 | EC | Without | With | 98 | CO2 |
| Example 6 | 1 | -F | -F | -P(=O)- | -OMe | 1 | Na | 1 | 2.00 | 60 | THF | Without | With | 95 | CO2 |

### [Example 2]

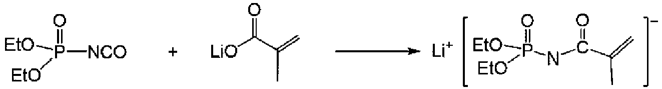

To a 50-mL glass reactor equipped with a stirrer and a thermometer, 20.00 g of ethyl acetate (water content: 30 ppm by mass) as a reaction solvent and 0.60 g (8.7 mmol) of methacrylic acid (water content: 400 ppm by mass) were added in a nitrogen atmosphere, and 0.07 g (8.8 mmol) of lithium hydride was added thereto and stirred at a liquid temperature of 20°C to prepare lithium methacrylate (the water content was estimated to be less than 100 ppm by mass) as a compound represented by the formula [3].

With maintaining the liquid temperature of 20°C, 1.80 g (10.0 mmol) of diethyl phosphoryl isocyanate as a phosphoryl isocyanate represented by the formula [2] was added dropwise thereto over 30 minutes. After the completion of the dropwise addition, stirring was further continued for two hours to perform the reaction. As a result of analyzing and quantifying the reaction solution with ¹⁹F-NMR, the reaction yield of lithium [(diethylphosphoryl)(methacrylic acid)imide] was 88% based on methacrylic acid. The reaction solution was concentrated under reduced pressure to remove dissolved carbon dioxide and diethyl phosphoryl isocyanate, and thus lithium [(diethylphosphoryl)(methacrylic acid)imide] was obtained. The results are shown in Table 1.

### [Example 3]

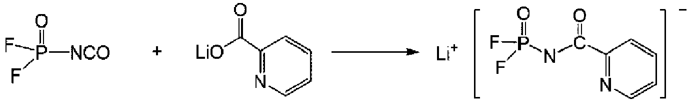

To a 100-mL glass reactor equipped with a stirrer and a thermometer, 50 g of ethyl methyl carbonate (water content: 20 ppm by mass) as a reaction solvent and 3.5 g (27.0 mmol) of lithium picolinate (water content: 60 ppm by mass) as a compound represented by the formula [3] were added in a nitrogen atmosphere and stirred at a liquid temperature of 20°C.

With maintaining the liquid temperature of 20°C, 2.9 g (23.0 mmol) of difluorophosphoryl isocyanate as a phosphoryl isocyanate represented by the formula [2] was added dropwise thereto over 30 minutes. After the completion of the dropwise addition, stirring was further continued for four hours to perform the reaction. As a result of analyzing and quantifying the reaction solution with ¹⁹F-NMR, the reaction yield of lithium

[(difluorophosphoryl)(picolinic acid)imide] was 98% based on difluorophosphoryl isocyanate. The reaction solution was filtered to remove remaining lithium picolinate, and thus an ethyl methyl carbonate solution of lithium [(difluorophosphoryl)(picolinic acid)imide] was obtained. The results are shown in Table 1.

### [Example 4]

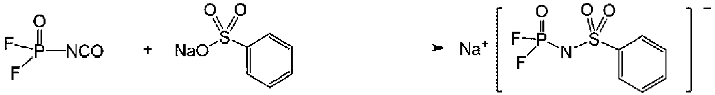

To a 50-mL glass reactor equipped with a stirrer and a thermometer, 25 g of ethyl acetate (water content: 30 ppm by mass) as a reaction solvent and 0.50 g (2.8 mmol) of sodium benzenesulfonate (water content: 200 ppm by mass) as a compound represented by the formula [3] were added in a nitrogen atmosphere and stirred at a liquid temperature of 20°C.

With maintaining the liquid temperature of 20°C, 0.63 g (5.0 mmol) of difluorophosphoryl isocyanate as a phosphoryl isocyanate represented by the formula [2] was added dropwise thereto over 10 minutes. After the completion of the dropwise addition, the liquid temperature was raised to 50°C, and stirring was further continued for eight hours to perform the reaction. As a result of analyzing and quantifying the reaction solution with ¹⁹F-NMR, the reaction yield of sodium [(difluorophosphoryl)(benzenesulfonyl)imide] was 91% based on sodium benzenesulfonate. The reaction solution was concentrated under reduced pressure to remove dissolved carbon dioxide and difluorophosphoryl isocyanate, and thus sodium [(difluorophosphoryl)(benzenesulfonyl)imide] was obtained. In this concentration operation, nearly the total amount of ethyl acetate as the solvent and difluorophosphoryl isocyanate was recovered as a fraction. The results are shown in Table 1.

### [Example 5]

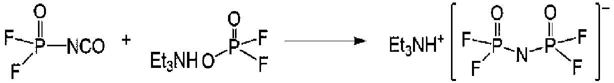

To a 50-mL glass reactor equipped with a stirrer and a thermometer, 30 g of ethylene carbonate (water content: 20 ppm by mass) as a reaction solvent and 2.80 g (14.0 mmol) of triethylammonium difluorophosphate (water content: 80 ppm by mass) as a compound represented by the formula [3] were added in a nitrogen atmosphere and stirred at a liquid temperature of 40°C.

With maintaining the liquid temperature of 40°C, 2.50 g (20 mmol) of difluorophosphoryl isocyanate as a phosphoryl isocyanate represented by the formula [2] was added dropwise thereto over 30 minutes. After the completion of the dropwise addition, the liquid temperature was raised to 60°C, and stirring was further continued for eight hours to perform the reaction. As a result of analyzing and quantifying the reaction solution with ¹⁹F-NMR, the reaction yield of triethylammonium [bis(difluorophosphoryl)imide] was 98% based on triethylammonium difluorophosphate. The reaction solution was concentrated under reduced pressure to remove dissolved carbon dioxide and difluorophosphoryl isocyanate, and thus an ethylene carbonate solution of triethylammonium [bis(difluorophosphoryl)imide] was obtained. In this concentration operation under reduced pressure, nearly the total amount of difluorophosphoryl isocyanate was recovered as a fraction. The results are shown in Table 1.

### [Example 6]

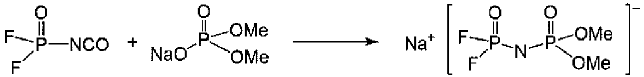

To a 50-mL glass reactor equipped with a stirrer and a thermometer, 10 g of tetrahydrofuran (water content: 50 ppm by mass) as a reaction solvent and 1.46 g (9.8 mmol) of sodium dimethyl phosphate (water content: 120 ppm by mass) as a compound represented by the formula [3] were added in a nitrogen atmosphere and stirred at a liquid temperature of 23°C.

With maintaining the liquid temperature of 23°C, 2.48 g (19.6 mmol) of difluorophosphoryl isocyanate as a phosphoryl isocyanate represented by the formula [2] was added dropwise thereto over 10 minutes. After the completion of the dropwise addition, the liquid temperature was raised to 60°C, and stirring was further continued for five hours to perform the reaction. As a result of analyzing and quantifying the reaction solution with ¹⁹F-NMR, the reaction yield of sodium [(difluorophosphoryl)(dimethylphosphoryl)imide] was 95% based on sodium dimethyl phosphate. The reaction solution was concentrated under reduced pressure to remove dissolved carbon dioxide and difluorophosphoryl isocyanate, and thus sodium [(difluorophosphoryl)(dimethylphosphoryl)imide] was obtained. In this concentration operation under reduced pressure, nearly the total amount of tetrahydrofuran and difluorophosphoryl isocyanate was recovered as a fraction. The results are shown in Table 1.

### [Example 7]

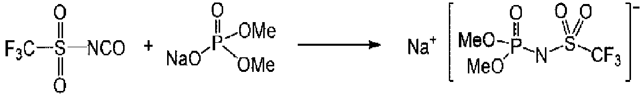

To a 100-mL stainless steel reactor equipped with a stirrer and a thermometer, 20 g of tetrahydrofuran (water content: 50 ppm by mass) as a reaction solvent and 0.73 g (4.9 mmol) of sodium dimethyl phosphate (water content: 50 ppm by mass) as a compound represented by the formula [6] were added in a nitrogen atmosphere and stirred at a liquid temperature of 20°C.

With maintaining the liquid temperature of 20°C, 0.84 g (4.8 mmol) of trifluoromethanesulfonyl isocyanate as a sulfonyl isocyanate represented by the formula [5] was added dropwise thereto over five minutes. After the completion of the dropwise addition, the liquid temperature was raised to 50°C, and stirring was further continued for four hours to perform the reaction. As a result of analyzing and quantifying the reaction solution with ¹⁹F-NMR, the reaction yield of sodium [(trifluoromethanesulfonyl)(dimethylphosphoryl)imide] was 95% based on trifluoromethanesulfonyl isocyanate. The reaction solution was filtered to remove remaining sodium dimethyl phosphate and then concentrated under reduced pressure, and thus sodium [(trifluoromethanesulfonyl)(dimethylphosphoryl)imide] was obtained. The results are shown in Table 2.

**[Table 2]**

| | Invention | Formula [5] | Formula [6] | | | | [5]/[6] Molar Ratio | Reaction Temperature [°C] | Reaction Solvent | Filtration Removal | Degassing-Concentration | -Reaction Yield-[%] | By-product |
|---|---|---|---|---|---|---|---|---|---|---|---|---|---|
| | | R1 | X1 | X2 | M | m | | | | | | | |
| Example 7 | 2 | -CF3 | -OMe | -OMe | Na | 1 | 0.98 | 50 | THF | With | With | 95 | CO2 |
| Example 8 | 2 | -CH=CH2 | -F | -F | Li | 1 | 0.92 | 50 | EMC | With | With | 96 | CO2 |
| Example 9 | 2 | -F | -F | -F | Li | 1 | 1.09 | 50 | EC | Without | With | 98 | CO2 |
| Example 10 | 2 | -F | -F | -OEt | Li | 1 | 0.85 | 50 | Ethyl acetate | With | With | 96 | CO2 |
| Example 11 | 2 | -Cl | -F | -F | Na | 1 | 10.00 | 50 | PC | Without | With | 90 | CO2 |

### [Example 8]

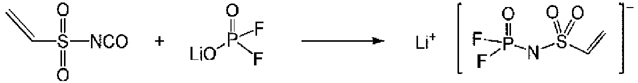

To a 50-mL glass reactor equipped with a stirrer and a thermometer, 25 g of ethyl methyl carbonate (water content: 20 ppm by mass) as a reaction solvent and 1.30 g (12.0 mmol) of lithium difluorophosphate (water content: 100 ppm by mass) as a compound represented by the formula [6] were added in a nitrogen atmosphere and stirred at a liquid temperature of 23°C.

With maintaining the liquid temperature of 23°C, 1.46 g (11.0 mmol) of vinylsulfonyl isocyanate as a sulfonyl isocyanate represented by the formula [5] was added dropwise thereto over 30 minutes. After the completion of the dropwise addition, the liquid temperature was raised to 50°C, and stirring was further continued for 12 hours to perform the reaction. As a result of analyzing and quantifying the reaction solution with ¹⁹F-NMR, the reaction yield of lithium [(vinylsulfonyl)(difluorophosphoryl)imide] was 96% based on vinylsulfonyl isocyanate. The reaction solution was filtered to remove remaining lithium difluorophosphate and then concentrated under reduced pressure, and thus lithium [(vinylsulfonyl)(difluorophosphoryl)imide] was obtained. The results are shown in Table 2.

### [Example 9]

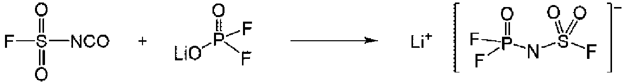

To a 50-mL glass reactor equipped with a stirrer and a thermometer, 25 g of ethylene carbonate (water content: 20 ppm by mass) as a reaction solvent and 2.50 g (23.0 mmol) of lithium difluorophosphate (water content: 100 ppm by mass) as a compound represented by the formula [6] were added in a nitrogen atmosphere and stirred at a liquid temperature of 50°C.

With maintaining the liquid temperature of 50°C, 3.10 g (25.0 mmol) of fluorosulfonyl isocyanate as a sulfonyl isocyanate represented by the formula [5] was added dropwise thereto over 30 minutes. After the completion of the dropwise addition, stirring was further continued at a liquid temperature of 50°C for four hours to perform the reaction. As a result of analyzing and quantifying the reaction solution with ¹⁹F-NMR, the reaction yield of lithium [(fluorosulfonyl)(difluorophosphoryl)imide] was 98% based on lithium difluorophosphate. The reaction solution was concentrated under reduced pressure to remove dissolved carbon dioxide and fluorosulfonyl isocyanate, and thus an ethylene carbonate solution of lithium [(fluorosulfonyl)(difluorophosphoryl)imide] was obtained. The results are shown in Table 2.

### [Example 10]

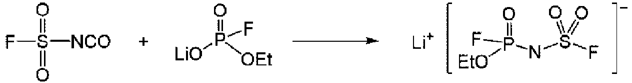

To a 50-mL glass reactor equipped with a stirrer and a thermometer, 25 g of ethyl acetate (water content: 30 ppm by mass) as a reaction solvent and 1.74 g (13.0 mmol) of lithium (fluoro)monoethylphosphate (water content: 120 ppm by mass) as a compound represented by the formula [6] were added in a nitrogen atmosphere and stirred at a liquid temperature of 50°C.

With maintaining the liquid temperature of 50°C, 1.46 g (11.0 mmol) of fluorosulfonyl isocyanate as a sulfonyl isocyanate represented by the formula [5] was added dropwise thereto over 30 minutes. After the completion of the dropwise addition, stirring was further continued at a liquid temperature of 50°C for five hours to perform the reaction. As a result of analyzing and quantifying the reaction solution with ¹⁹F-NMR, the reaction yield of lithium {[fluorosulfonyl][(fluoro)(ethyl)phosphoryl)]imide} was 96% based on fluorosulfonyl isocyanate. The reaction solution was concentrated under reduced pressure to remove dissolved carbon dioxide and fluorosulfonyl isocyanate, and the insoluble matter was removed by filtration. Thus, an ethyl acetate solution of lithium {[fluorosulfonyl][(fluoro)(ethyl)phosphoryl)]imide} was obtained. The results are shown in Table 2.

### [Example 11]

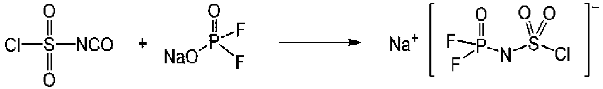

To a 50-mL glass reactor equipped with a stirrer and a thermometer, 25 g of propylene carbonate (water content: 20 ppm by mass) as a reaction solvent and 1.20 g (4.9 mmol) of sodium difluorophosphate (water content: 100 ppm by mass) as a compound represented by the formula [6] were added in a nitrogen atmosphere and stirred at a liquid temperature of 20°C.

With maintaining the liquid temperature of 20°C, 6.90 g (49.0 mmol) of chlorosulfonyl isocyanate as a sulfonyl isocyanate represented by the formula [5] was added dropwise thereto over five minutes. After the completion of the dropwise addition, the liquid temperature was raised to 50°C, and stirring was further continued for eight hours to perform the reaction. As a result of analyzing and quantifying the reaction solution with ¹⁹F-NMR, the reaction yield of sodium [(chlorosulfonyl)(difluorophosphoryl)imide] was 90% based on sodium difluorophosphate. The reaction solution was concentrated under reduced pressure to remove dissolved carbon dioxide and chlorosulfonyl isocyanate, and thus a propylene carbonate solution of sodium [(chlorosulfonyl)(difluorophosphoryl)imide] was obtained. The results are shown in Table 2.

### [Examples 1-1 and 1-2]

Reaction solutions were obtained in the same manner as in Example 1 except that the water content of the compound represented by the formula [3] used in Example 1 was changed as shown in Table 3. As shown in Table 3, it was found that, as the water content of the compound represented by the formula [3] was lower (in particular, 1000 ppm by mass or less), a high reaction yield could be achieved. The reason why the reaction yield was slightly decreased when the water content of the compound represented by the formula [3] was relatively high (for example, more than 1000 ppm by mass) is presumed to be that the compound represented by the formula [2] as the reaction partner was partially hydrolyzed. The results are shown in Table 3.

**[Table 3]**

| | Invention | Formula [2] | | Formula [3] | | | | | | [2]/[3] Molar Ratio | Reaction Temperature [°C] | Reaction Solvent | Reaction Yield-[%] |
|---|---|---|---|---|---|---|---|---|---|---|---|---|---|
| | | X1 | X2 | Z | R1(R2) | a | M | m | Water Content [ppm by mass] | | | | |
| Example 1 | 1 | -Cl | -Cl | -C(=O)- | -CF3 | 0 | Li | 1 | 90 | 1.20 | 60 | Propionitrile | 98 |
| Example 1-1 | 1 | -Cl | -Cl | -C(=O)- | -CF3 | 0 | Li | 1 | 830 | 1.20 | 60 | Propionitrile | 93 |
| Example 1-2 | 1 | -Cl | -Cl | -C(=O)- | -CF3 | 0 | Li | 1 | 1140 | 1.20 | 60 | Propionitrie | 89 |

### [Examples 7-1 and 7-2]

Reaction solutions were obtained in the same manner as in Example 7 except that the water content of the compound represented by the formula [6] used in Example 7 was changed as shown in Table 4. As shown in Table 4, it was found that, as the water content of the compound represented by the formula [6] was lower (in particular, 1000 ppm by mass or less), a high reaction yield could be achieved. The reason why the reaction yield was slightly decreased when the water content of the compound represented by the formula [6] was relatively high (for example, more than 1000 ppm by mass) is presumed to be that the compound represented by the formula [5] as the reaction partner was partially hydrolyzed. The results are shown in Table 4.

**[Table 4]**

| | Invention | Formula [5] | Formula [6] | | | | | [5]/[6] Molar Ratio | Reaction Temperature [°C] | Reaction Solvent | Reaction Yield [%] |
|---|---|---|---|---|---|---|---|---|---|---|---|
| | | R1 | X1 | X2 | M | m | Water Content [ppm by mass] | | | | |
| Example 7 | 2 | -CF3 | -OMe | -OMe | Na | 1 | 50 | 0.98 | 50 | THF | 95 |
| Example 7-1 | 2 | -CF3 | -OMe | -OMe | Na | 1 | 710 | 0.98 | 50 | THF | 92 |
| Example 7-2 | 2 | -CF3 | -OMe | -OMe | Na | 1 | 1290 | 0.98 | 50 | THF | 88 |

### [Examples 2-1 and 2-2]

Reaction solutions were obtained in the same manner as in Example 2 except that the water content of the reaction solvent used in Example 2 was changed as shown in Table 5. As shown in Table 5, it was found that, as the water content of the reaction solvent was lower (in particular, 100 ppm by mass or less), a high reaction yield could be achieved. The reason why the reaction yield was slightly decreased when the water content of the reaction solvent was relatively high (for example, more than 100 ppm by mass) is presumed to be that the compound represented by the formula [2] was partially hydrolyzed. The results are shown in Table 5.

**[Table 5]**

| | Invention | Formula [2] | | Formula [3] | | | | | [2]/[3] Molar-Ratio | Reaction Temperature [°C] | Reaction Solvent | | Reaction Yield [%] |
|---|---|---|---|---|---|---|---|---|---|---|---|---|---|
| | | X1 | X2 | Z | R1(R2) | a | M | m | | | Kind | Water Content [ppm by mass] | |
| Example 2 | 1 | -OEt | -OEt | -C(=O)- | -C(=CH2)CH3 | 0 | Li | 1 | 1.15 | 20 | Ethyl acetate | 30 | 88 |
| Example 2-1 | 1 | -OEt | -OEt | -C(=O)- | -C(=CH2)CH3 | 0 | Li | 1 | 1.15 | 20 | Ethyl acetate | 80 | 84 |
| Example 2-2 | 1 | -OEt | -OEt | -C(=O)- | -C(=CH2)CH3 | 0 | Li | 1 | 1.15 | 20 | Ethyl acetate | 220 | 76 |

### [Examples 8-1 and 8-2]

Reaction solutions were obtained in the same manner as in Example 8 except that the water content of the reaction solvent used in Example 8 was changed as shown in Table 6. As shown in Table 6, it was found that, as the water content of the reaction solvent was lower (in particular, 100 ppm by mass or less), a high reaction yield could be achieved. The reason why the reaction yield was slightly decreased when the water content of the reaction solvent was relatively high (for example, more than 100 ppm by mass) is presumed to be that the compound represented by the formula [5] was partially hydrolyzed. The results are shown in Table 6.

**[Table 6]**

| | Invention | Formula [5] | Formula [6] | | | | [5]/[6] Molar Ratio | Reaction Temperature [°C] | Reaction Solvent | | Reaction Yield [%] |
|---|---|---|---|---|---|---|---|---|---|---|---|
| | | R1 | X1 | X2 | M | m | | | Kind | Water Content [ppm by mass] | |
| Example 8 | 2 | -CH=CH2 | -F | -F | Li | 1 | 0.92 | 50 | EMC | 20 | 96 |
| Example 8-1 | 2 | -CH=CH2 | -F | -F | Li | 1 | 0.92 | 50 | EMC | 90 | 91 |
| Example 8-2 | 2 | -CH=CH2 | -F | -F | Li | 1 | 0.92 | 50 | EMC | 190 | 84 |

### [Examples 3-1 to 3-4]

Reaction solutions were obtained in the same manner as in Example 3 except that the [2]/[3] molar ratio in Example 3 was changed as shown in Table 7. As shown in Table 7, it was found that, when the [2]/[3] molar ratio was in the range of 0.1 to 10, a high reaction yield could be efficiently (economically) achieved. [2]/[3] of 0.1 or more tended to be advantageous in economical aspects because the amount of the obtained target product was high, the amount of remaining lithium picolinate was low, and it was easy to remove remaining lithium picolinate by filtration. On the other hand, [2]/[3] of 10 or less tended to be advantageous in economical aspects because the amount of excess isocyanate compound was low, and the reaction yield tended to be high. It is presumed that this is because the reaction between the target imide compound and a small excess of isocyanate compound hardly occurs. The results are shown in Table 7.

**[Table 7]**

| | Invention | Formula [2] | | Formula [3] | | | | | [2]/[3] Molar Ratio | **Reaction** Temperature [°C] | Reaction Solvent | Reaction Yield [%] |
|---|---|---|---|---|---|---|---|---|---|---|---|---|
| | | X¹ | X2 | Z | R1(R2) | a | M | m | | | | |
| Example 3 | 1 | -F | -F | -C(=O)- | 2-Pyridyl group | 0 | Li | 1 | 0.85 | 20 | EMC | 98 |
| Example 3-1 | 1 | -F | -F | -C(=O)- | 2-Pyridyl group | 0 | Li | 1 | 0.05 | 20 | EMC | 97 |
| Example 3-2 | 1 | -F | -F | -C(=O)- | 2-Pyridyl group | 0 | Li | 1 | 0.3 | 20 | EMC | 98 |
| Example 3-3 | 1 | -F | -F | -C(=O)- | 2-Pyridyl group | 0 | Li | 1 | 5 | 20 | EMC | 91 |
| Example 3-4 | 1 | -F | -F | -C(=O)- | 2-Pyridyl group | 0 | Li | 1 | 11 | 20 | EMC | 85 |

### [Examples 9-1 to 9-4]

Reaction solutions were obtained in the same manner as in Example 9 except that the [5]/[6] molar ratio in Example 9 was changed as shown in Table 8. As shown in Table 8, it was found that, when the [5]/[6] molar ratio was in the range of 0.1 to 10, a high reaction yield could be efficiently (economically) achieved. [5]/[6] of 0.1 or more tended to be advantageous in economical aspects because the amount of the obtained target product was high, the amount of remaining lithium difluorophosphate was low, and it was easy to remove remaining lithium difluorophosphate by filtration. On the other hand, [5]/[6] of 10 or less tended to be advantageous in economical aspects because the amount of excess isocyanate compound was low, and the reaction yield tended to be high. It is presumed that this is because the reaction between the target imide compound and a small excess of isocyanate compound hardly occurs. The results are shown in Table 8.

**[Table 8]**

| | Invention | Formula [5] | Formula [6] | | | | [5]/[6] Molar Ratio | Reaction Temperature [°C] | Reaction Solvent | Reaction Yield [%] |
|---|---|---|---|---|---|---|---|---|---|---|
| | | R1 | X1 | X2 | M | m | | | | |
| Example 9 | 2 | -F | -F | -F | Li | 1 | 1.09 | 50 | EC | 98 |
| Example 9-1 | 2 | -F | -F | -F | Li | 1 | 0.05 | 50 | EC | 98 |
| Example 9-2 | 2 | -F | -F | -F | Li | 1 | 0.3 | 50 | EC | 98 |
| Example 9-3 | 2 | -F | -F | -F | Li | 1 | 5 | 50 | EC | 90 |
| Example 9-4 | 2 | -F | -F | -F | Li | 1 | 11 | 50 | EC | 84 |

### [Examples 5-1 to 5-4]

Reaction solutions were obtained in the same manner as in Example 5 except that the reaction temperature in Example 5 was changed as shown in Table 9. As shown in Table 9, the reaction yield tended to be particularly high when the reaction temperature was 120°C or lower. When the temperature was 10°C or higher, the progress rate of the reaction tended to be particularly high. Since the reaction time was the same as in Example 5, the reaction yield of Example 5-1 was low, but when a sufficient reaction time is taken, a good reaction yield can be achieved. However, this case tends to be disadvantageous from the viewpoint of productivity. The results are shown in Table 9.

**[Table 9]**

| | Invention | Formula [2] | | Formula [3] | | | | | [2]/[3] Molar Ratio | Reaction Temperature [°C] | Reaction Solvent | Reaction Yield [%] |
|---|---|---|---|---|---|---|---|---|---|---|---|---|
| | | X1 | X2 | Z | R1(R2) | a | M | m | | | | |
| Example 5 | 1 | -F | -F | -P(=O)- | -F | 1 | Et3NH | 1 | 1.43 | 60 | EC | 98 |
| Example 5-1 | 1 | -F | -F | -P(=O)- | -F | 1 | Et3NH | 1 | 1.43 | 0 | EC | 17 |
| Example 5-2 | 1 | -F | -F | -P(=O)- | -F | 1 | Et3NH | 1 | 1.43 | 10 | EC | 55 |
| Example 5-3 | 1 | -F | -F | -P(=O)- | -F | 1 | Et3NH | 1 | 1.43 | 100 | EC | 82 |
| Example 5-4 | 1 | -F | -F | -P(=O)- | -F | 1 | Et3NH | 1 | 1.43 | 130 | EC | 75 |

### [Examples 11-1 to 11-4]

Reaction solutions were obtained in the same manner as in Example 11 except that the reaction temperature in Example 11 was changed as shown in Table 10. As shown in Table 10, the reaction yield tended to be particularly high when the reaction temperature was 120°C or lower. When the temperature was 10°C or higher, the progress rate of the reaction tended to be particularly high. Since the reaction time was the same as in Example 11, the reaction yield of Example 11-1 was low, but when a sufficient reaction time is taken, a good reaction yield can be achieved. However, this case tends to be disadvantageous from the viewpoint of productivity. The results are shown in Table 10.

**[Table 10]**

| | Invention | Formula [5] | Formula [6] | | | | [5]/[6] Molar Ratio | Reaction Temperature [°C] | Reaction Solvent | Reaction Yield [%] |
|---|---|---|---|---|---|---|---|---|---|---|
| | | R1 | X1 | X2 | M | m | | | | |
| Example 11 | 2 | -Cl | -F | -F | Na | 1 | 10.00 | 50 | PC | 90 |
| Example 11-1 | 2 | -Cl | -F | -F | Na | 1 | 10.00 | 0 | PC | 15 |
| Example 11-2 | 2 | -Cl | -F | -F | Na | 1 | 10.00 | 20 | PC | 59 |
| Example 11-3 | 2 | -Cl | -F | -F | Na | 1 | 10.00 | 100 | PC | 84 |
| Example 11-4 | 2 | -Cl | -F | -F | Na | 1 | 10.00 | 130 | PC | 72 |

### [Examples 6-1 to 6-6]

Reaction solutions were obtained in the same manner as in Example 6 except that the amount of the reaction solvent per one part by mass of the compound represented by the formula [3] in Example 6 was changed as shown in Table 11. As shown in Table 11, when the amount of the reaction solvent was one part by mass or more, the progress rate of the reaction tended to be particularly high. Since the reaction time was the same as in Example 6, the reaction yield of Example 6-1 was low, but when a sufficient reaction time is taken, a good reaction yield can be achieved. However, this case tends to be disadvantageous from the viewpoint of productivity. The results are shown in Table 11.

**[Table 11]**

| | Invention | Formula [2] | | Formula [3] | | | | | [2]/[3] Molar Ratio | Reaction Temperature [°C] | Reaction Solvent | | Reaction Yield [%] |
|---|---|---|---|---|---|---|---|---|---|---|---|---|---|
| | | X¹ | X² | Z | R1(R2) | a | M | m | | | Kind | Amount Per One Part by Mass of Formula [3] [parts by mass] | |
| Example 6 | 1 | -F | -F | -P(=O)- | -OMe | 1 | Na | 1 | 2.00 | 60 | THF | 6.8 | 95 |
| Example 6-1 | 1 | -F | -F | -P(=O)- | -OMe | 1 | Na | 1 | 2.00 | 60 | THF | 0.5 | 24 |
| Example 6-2 | 1 | -F | -F | -P(=O)- | -OMe | 1 | Na | 1 | 2.00 | 60 | THF | 1.5 | 85 |
| Example 6-3 | 1 | -F | -F | -P(=O)- | -OMe | 1 | Na | 1 | 2.00 | 60 | THF | 4 | 95 |
| Example 6-4 | 1 | -F | -F | -P(=O)- | -OMe | 1 | Na | 1 | 2.00 | 60 | THF | 15 | 91 |
| Example 6-5 | 1 | -F | -F | -P(=O)- | -OMe | 1 | Na | 1 | 2.00 | 60 | THF | 105 | 91 |
| Example 6-6 | 1 | -F | -F | -P(=O)- | -OMe | 1 | Na | 1 | 2.00 | 60 | Without | 0 | 2 |

### [Examples 9-1 to 9-7]

Reaction solutions were obtained in the same manner as in Example 9 except that the amount of the reaction solvent per one part by mass of the compound represented by the formula [6] in Example 9 was changed as shown in Table 12. As shown in Table 12, when the amount of the reaction solvent was one part by mass or more, the progress rate of the reaction tended to be particularly high. Since the reaction time was the same as in Example 9, the reaction yield of Example 9-1 was low, but when a sufficient reaction time is taken, a good reaction yield can be achieved. However, this case tends to be disadvantageous from the viewpoint of productivity. The results are shown in Table 12.

**[Table 12]**

| | Invention | Formula [5] | Formula [6] | | | | [5]/[6] Molar Ratio | Reaction Temperature [°C] | Reaction Solvent | | Reaction Yield [%] |
|---|---|---|---|---|---|---|---|---|---|---|---|
| | | R1 | X1 | X2 | M | m | | | Kind | Amount Per One Part by Mass of Formula [6] [parts by mass] | |
| Example 9 | 2 | -F | -F | -F | Li | 1 | 1.09 | 50 | EC | 10 | 98 |
| Example 9-1 | 2 | -F | -F | -F | Li | 1 | 1.09 | 50 | EC | 0.5 | 13 |
| Example 9-2 | 2 | -F | -F | -F | Li | 1 | 1.09 | 50 | EC | 1.5 | 84 |
| Example 9-3 | 2 | -F | -F | -F | Li | 1 | 1.09 | 50 | EC | 5 | 98 |
| Example 9-4 | 2 | -F | -F | -F | Li | 1 | 1.09 | 50 | EC | 15 | 97 |
| Example 9-5 | 2 | -F | -F | -F | Li | 1 | 1.09 | 50 | EC | 25 | 95 |
| Example 9-6 | 2 | -F | -F | -F | Li | 1 | 1.09 | 50 | EC | 105 | 95 |
| Example 9-7 | 2 | -F | -F | -F | Li | 1 | 1.09 | 50 | Without | 0 | 2 |

As described above, even when various conditions are changed, according to the production methods of the present disclosure, an imidic acid or an imidic acid salt having a phosphoryl group can be produced.

### INDUSTRIAL APPLICABILITY

According to the present disclosure, a new method for producing an imidic acid or an imidic acid salt having a phosphoryl group can be provided.

Although the present disclosure has been explained in detail referring to specific embodiments, it will be apparent to those skilled in the art that various changes and modifications can be made without departing from the spirit and the scope of the present disclosure.

The present application is based on a Japanese Patent Application (No. 2022-162214) filed on October 7, 2022, the contents of which are incorporated herein by reference.

## Claims

1. A method for producing an imidic acid or an imidic acid salt represented by the following formula [1], comprising a reaction step of allowing a phosphoryl isocyanate represented by the following formula [2] to react with a compound represented by the following formula [3], 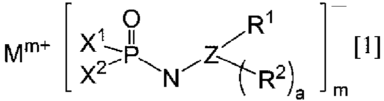
wherein in the formula [1], X¹ and X² are each independently a chlorine atom, a fluorine atom, or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, wherein at least one selected from the group consisting of a fluorine atom, an oxygen atom, a nitrogen atom, and an unsaturated bond may be present in the organic group,
Z is -P(=O)-, -S(=O)₂-, or -C(=O)-, when Z is -P(=O)-, a is 1, and when Z is -S(=O)₂-, or -C(=O)-, a is 0,
R¹ and R² are each independently a chlorine atom, a fluorine atom, or an organic group selected from the group consisting of a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, wherein at least one selected from the group consisting of a fluorine atom, an oxygen atom, and an unsaturated bond may be present in the organic group,
M is a proton, an alkali metal cation, an alkaline earth metal cation, or an onium cation, and
m represents the same integer as a valence of the corresponding cation, 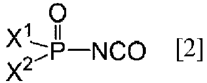
wherein in the formula [2], X¹ and X² are each independently a chlorine atom, a fluorine atom, or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, wherein at least one selected from the group consisting of a fluorine atom, an oxygen atom, a nitrogen atom, and an unsaturated bond may be present in the organic group, 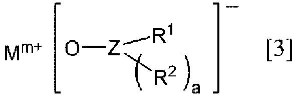
wherein in the formula [3], Z is -P(=O)-, -S(=O)₂-, or -C(=O)-,
when Z is -P(=O)-, a is 1,
when Z is -S(=O)₂-, a is 0, and
when Z is -C(=O)-, a is 0,
R¹ and R² are each independently a chlorine atom, a fluorine atom, or an organic group selected from the group consisting of a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, wherein at least one selected from the group consisting of a fluorine atom, an oxygen atom, and an unsaturated bond may be present in the organic group,
M is a proton, an alkali metal cation, an alkaline earth metal cation, or an onium cation, and
m represents the same integer as a valence of the corresponding cation.

2. The method for producing an imidic acid or an imidic acid salt according to claim 1, wherein a used amount of the phosphoryl isocyanate represented by the formula [2] is 0.1 to 10 mol per 1 mol of the compound represented by the formula [3].

3. The method for producing an imidic acid or an imidic acid salt according to claim 1 or 2, wherein a reaction temperature in the reaction step is -20 to 200°C.

4. The method for producing an imidic acid or an imidic acid salt according to claim 1 or 2, wherein the reaction step is performed in a reaction solvent.

5. The method for producing an imidic acid or an imidic acid salt according to claim 4, wherein the reaction solvent is at least one solvent selected from the group consisting of a nitrile, a chain ether, a cyclic ether, a chain ester, a cyclic ester, a chain carbonate, a cyclic carbonate, and a sulfur-containing solvent.

6. The method for producing an imidic acid or an imidic acid salt according to claim 1 or 2, wherein M^{m+} is a proton, a lithium ion, a sodium ion, a potassium ion, a trialkyl ammonium ion, or a tetraalkyl ammonium ion.

7. The method for producing an imidic acid or an imidic acid salt according to claim 1 or 2, wherein X¹ and X² are each independently a chlorine atom, a fluorine atom, or a group selected from the group consisting of a methyl group, a trifluoromethyl group, a phenyl group, a fluorophenyl group, a vinyl group, a thienyl group, and a pyridinyl group.

8. The method for producing an imidic acid or an imidic acid salt according to claim 1 or 2, wherein a reaction solution after the reaction step is degassing-concentrated.

9. A method for producing an imidic acid or an imidic acid salt represented by the following formula [4], comprising a reaction step of allowing a sulfonyl isocyanate represented by the following formula [5] to react with a compound represented by the following formula [6], 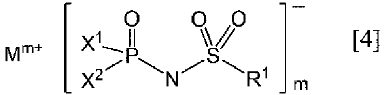
wherein in the formula [4], X¹ and X² are each independently a chlorine atom, a fluorine atom, or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, wherein at least one selected from the group consisting of a fluorine atom, an oxygen atom, a nitrogen atom, and an unsaturated bond may be present in the organic group,
R¹ is a chlorine atom, a fluorine atom, or an organic group selected from the group consisting of a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, wherein at least one selected from the group consisting of a fluorine atom, an oxygen atom, and an unsaturated bond may be present in the organic group,
M is a proton, an alkali metal cation, an alkaline earth metal cation, or an onium cation, and
m represents the same integer as a valence of the corresponding cation, 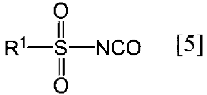
wherein in the formula [5], R¹ is a chlorine atom, a fluorine atom, or an organic group selected from the group consisting of a linear or branched alkyl group having 1 to 10 carbon atoms, a linear or branched alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, wherein at least one selected from the group consisting of a fluorine atom, an oxygen atom, and an unsaturated bond may be present in the organic group, 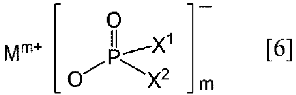
wherein in the formula [6], X¹ and X² are each independently a chlorine atom, a fluorine atom, or an organic group selected from the group consisting of a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, wherein at least one selected from the group consisting of a fluorine atom, an oxygen atom, a nitrogen atom, and an unsaturated bond may be present in the organic group,
M is a proton, an alkali metal cation, an alkaline earth metal cation, or an onium cation, and
m represents the same integer as a valence of the corresponding cation.

10. The method for producing an imidic acid or an imidic acid salt according to claim 9, wherein a used amount of the sulfonyl isocyanate represented by the formula [5] is 0.1 to 10 mol per 1 mol of the compound represented by the formula [6].

11. The method for producing an imidic acid or an imidic acid salt according to claim 9 or 10, wherein a reaction temperature in the reaction step is 0 to 150°C.

12. The method for producing an imidic acid or an imidic acid salt according to claim 9 or 10, wherein the reaction step is performed in a reaction solvent.

13. The method for producing an imidic acid or an imidic acid salt according to claim 12, wherein the reaction solvent is at least one solvent selected from the group consisting of a nitrile, a chain ether, a cyclic ether, a chain ester, a cyclic ester, a chain carbonate, a cyclic carbonate, and a sulfur-containing solvent.

14. The method for producing an imidic acid or an imidic acid salt according to claim 9 or 10, wherein M^{m+} is a proton, a lithium ion, a sodium ion, a potassium ion, a trialkyl ammonium ion, or a tetraalkyl ammonium ion.

15. The method for producing an imidic acid or an imidic acid salt according to claim 9 or 10, wherein X¹ and X² are each independently a chlorine atom, a fluorine atom, or a group selected from the group consisting of a methyl group, a trifluoromethyl group, a phenyl group, a fluorophenyl group, a vinyl group, a thienyl group, and a pyridinyl group.

16. The method for producing an imidic acid or an imidic acid salt according to claim 9 or 10, wherein the reaction solution after the reaction step is degassing-concentrated.
